# EUROPEAN PATENT SPECIFICATION

(11) **EP 1 571 681 B1**
(45) Date of publication and mention of the grant of the patent: **05.11.2008**
(21) Application number: 05251221.7
(22) Date of filing: 01.03.2005
(51) Int. Cl.: H01G 9/06, H01G 9/08, H01G 9/10

(54) **Molded polymeric cradle for containing an anode in an electrolytic capacitor for use in high shock and vibration conditions**
Gegossene polymere Aufnahmevorrichtung zur Aufnahme einer Anode in einem Elektrolytkondensator zur Verwendung unter Bedingungen mit hoher Stoss- und Schwingungsbelastung
Support polymère moulé pour contenir une anode dans un condensateur électrolytique pour utilisation dans des conditions de chocs et de vibrations

(30) Priority: 01.03.2004 US 548954 P
(43) Date of publication of application: 07.09.2005
(73) Proprietor: Wilson Greatbatch Technologies, Inc., Clarence, NY 14031 (US)
(72) Inventor: Muffoletto, Barry, Alden New York 14004 NY (US); O'Connor, Laurie, East Aurora New York 14052 NY (US)
(74) Representative: Duckett, Anthony Joseph

(56) References cited:
- US-A- 3 697 823
- US-A1- 2003 081 374
- US-A1- 2003 169 559
- US-B1- 6 297 943
- US-B1- 6 334 879
- PATENT ABSTRACTS OF JAPAN vol. 2003, no. 12, 5 December 2003 (2003-12-05) -& JP 2003 249422 A (MATSUSHITA ELECTRIC IND CO LTD), 5 September 2003 (2003-09-05)

## Description

### CROSS-REFERENCE TO RELATED APPLICATION

The present application claims priority based upon provisional application Serial No. 60/548,954, filed March 1, 2004.

### BACKGROUND OF THE INVENTION

The present invention generally relates to a capacitor and, more particularly, to a capacitor capable of being subjected to high shock and vibration forces without failing.

A sealed capacitor, which may be hermetic, having a generally flat, planar geometry, is described in US 6,334,879.

### SUMMARY OF THE INVENTION

Capacitors are used frequently in applications where high shock and vibration levels are experienced. A notable example is in the oil and gas industry where "measurement while drilling" applications can cause severe stress forces to a capacitor. Under high shock and vibration conditions, capacitors without adequate stabilization are capable of failing due Lo movement of the electrodes within the case, for example the anode pellet in an electrolytic capacitor. This movement can result in mechanical failure of the anode pellet lead rendering the capacitor inoperative. In that respect, mechanical stabilization of the anode pellet inside the casing is important to improving the reliability and safety of capacitors subjected to high shock and vibration conditions.

The capacitor of the present invention provides such mechanical stabilization through a surrounding polymeric cradle that contacts between the casing sidewall and the anode pellet sidewall to lock the anode in place. Alternatively, the polymeric cradle contacts between a welding strap surrounding the butt seam between mating "clam shell" casing portions and the anode pellet sidewall. This structure prevents the anode pellet from moving along both an x- and y-axes. Having the cathode active material contacting the opposed major casing sidewalls being in a closely spaced relationship with the anode pellet through an intermediate separator prevents movement along the z-axis.

These and other aspects of the present invention will become more apparent to those skilled in the art by reference to the following description and to the appended drawings.

### BRIEF DESCRIPTION OF THE DRAWINGS

Fig. 1 is a perspective view of a capacitor 10 according to the present invention.
Fig. 2 is a side elevational view of an anode 12 having an embedded anode wire 34 extending from a notch 32 thereof.
Fig. 3 is a cross-sectional view of a glass-to-metal seal 38 for an anode lead 36.
Fig. 4 is a side elevational view of the anode lead 36 including the glass-to-metal seal 38 connected to the embedded wire 34 of anode 12.
Fig. 5 is a plan view of the anode 12 including the glass-to-metal seal 38 positioned in a mold portion 48 with a plurality of spacers 54A to 54J positioned about its periphery and interior of a welding strap 50.
Fig. 6 is a plan view showing polymeric material being injected into the mold shown in Fig. 5.
Fig. 7 is a side elevational view showing the anode 12 being held in position inside the weld strap 50 by the polymeric web 58 and integral protrusions 58A to 58J after being removed from the mold shown in Fig. 6.
Fig. 8 is a side elevational view of a casing portion 20 supporting a cathode active material 14 on a face wall 28 thereof.
Fig. 9 is a side elevational view showing the assembly of Fig. 7 comprising the anode 12, polymeric material 58 and welding strap 50 after being nested in the casing portion 20 of Fig. 8.
Fig. 10 is a cross-sectional view along line 10-10 of Fig. 9.
Figs. 10A and 10B are alternate embodiments similar to the view shown in Fig. 10, but with the capacitor housed in different casings
Fig. 11 is a plan view of the anode 12 including the glass-to-metal seal 38 positioned in a mold portion 48 with a plurality of spacer pegs 102A to 102L positioned about its periphery and interior of the welding strap 50.
Fig. 12 is a plan view showing polymeric material being injected into the mold shown in Fig. 11.

### DETAILED DESCRIPTION OF THE PREFERRED EMBODIMENTS

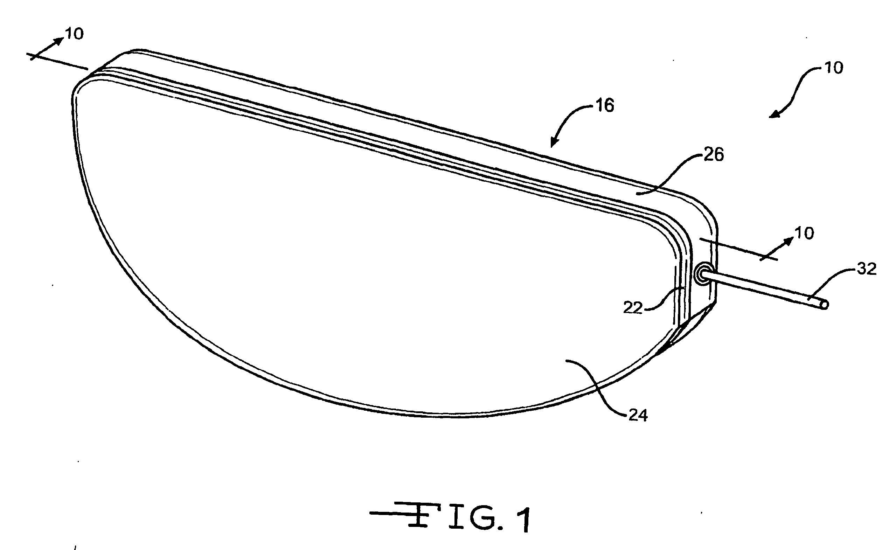

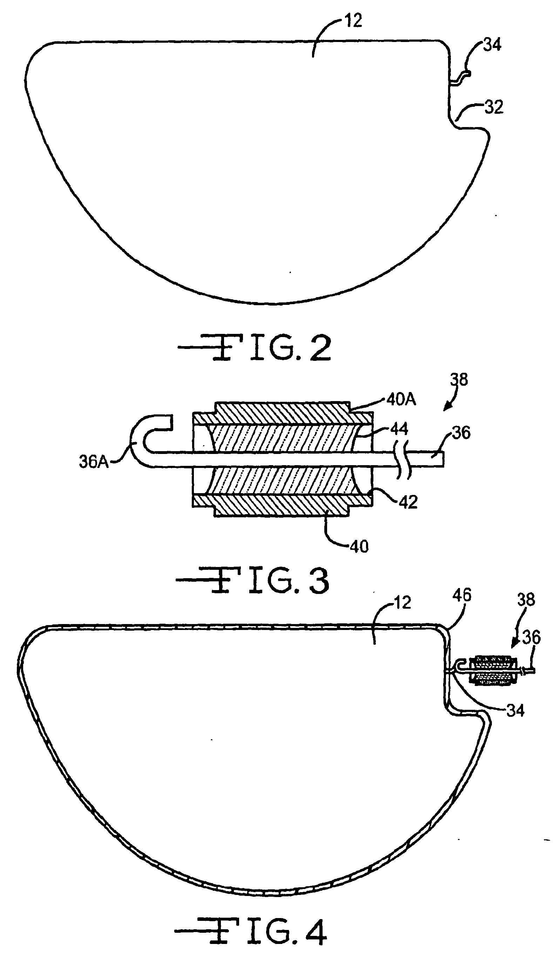

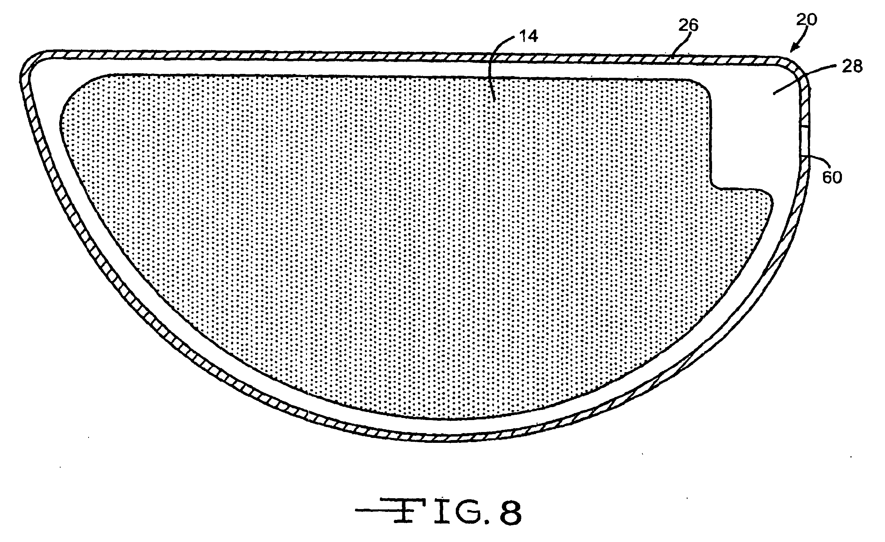

Referring now to the drawings, Fig. 1 is a perspective view showing a capacitor 10 according to the present invention. The capacitor 10 comprises an anode 12 (Fig. 2) of an anode active material and a cathode of a cathode active material 14 (Fig. 8) housed inside a hermetically sealed casing 16. The capacitor electrodes are operatively associated with each other by a working electrolyte (not shown) contained inside the casing, as will be described in detail hereinafter. The capacitor 10 is of an electrolyte type with the cathode comprising a conductive substrate having capacitive properties.

As particularly shown in Figs. 1 and 8 to 10, the casing 16 is of a metal material comprising first and second casing portions 18 and 20. Casing portion 18 comprises a surrounding sidewall 22 extending to a face wall 24. Similarly, casing portion 20 comprises a surrounding sidewall 26 extending to a face wall 28. Sidewall 26 is sized so that sidewall 22 is in an overlapping relationship therewith. Then, the casing portions 18, 20 are hermetically sealed together by welding the overlapping sidewalls 22, 26 where they contact. The weld 30 is provided by any conventional means; however, a preferred method is by laser welding.

The mating casing portions 18, 20 are preferably selected from the group consisting of tantalum, titanium, nickel, molybdenum, niobium, cobalt, stainless steel, tungsten, platinum, palladium, gold, silver, copper, chromium, vanadium, aluminum, zirconium, hafnium, zinc, iron, and mixtures and alloys thereof. Preferably, the face and sidewalls of the casing portions have a thickness of about 0.005 to about 0.015 inches.

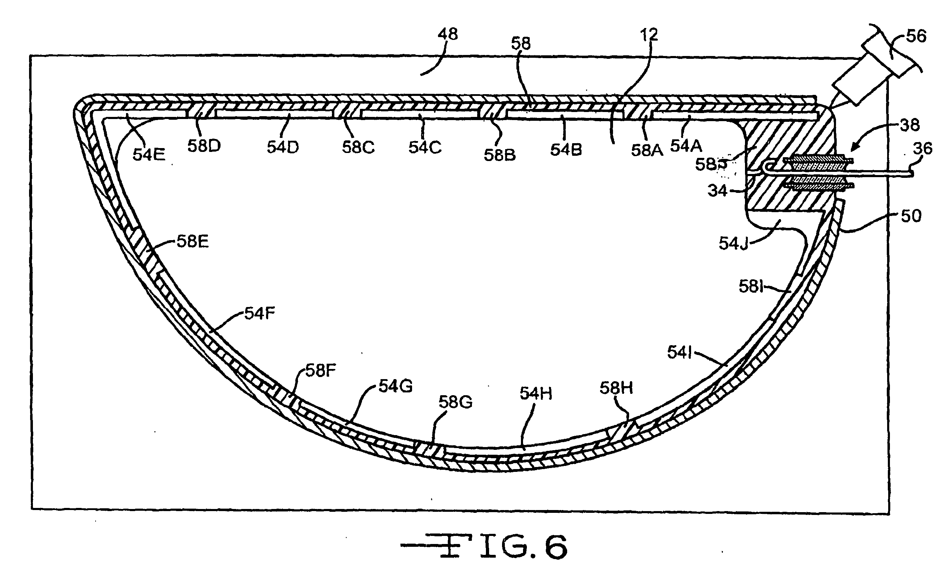

The active material of the anode 12 is typically of a metal selected from the group consisting of tantalum, aluminum, titanium, niobium, zirconium, hafnium, tungsten, molybdenum, vanadium, silicon, germanium, and mixtures thereof in the form of a pellet. As is well known by those skilled in the art, the anode metal in powdered form, for example tantalum powder, is compressed into a pellet having a notch 32 from which an embedded anode wire 34 (Figs. 2, 4 to 7 and 9) extends. The anode wire 34 preferably comprises the same material as the anode active material. The anode pellet is sintered under a vacuum at high temperatures and then anodized in a suitable electrolyte. The anodizing electrolyte fills the pores of the pressed powder body and a continuous dielectric oxide is formed thereon. In that manner, the anode 12 and extending wire 34 are provided with a dielectric oxide layer formed to a desired working voltage. The anode can also be of an etched aluminum, niobium, or titanium foil.

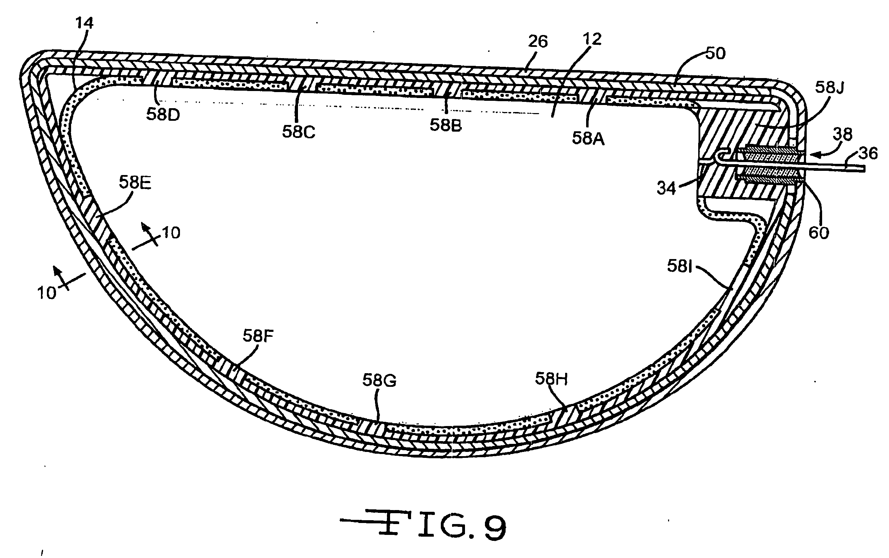

After the anode 12 and extending wire 34 are anodized to the desired formation voltage, the dielectric oxide is removed from the wire connected to an anode lead 36 supported in an insulative glass-to-metal seal 38 (GTMS). The weld and lead are then re-anodized. The glass-to-metal seal 38 comprises a ferrule 40 defining an internal cylindrical through bore or passage 42 of constant inside diameter. An insulative glass 44 provides a hermetic seal between the bore 42 and the anode lead 36 passing there through. The anode lead 36 has a J-shaped proximal portion 36A that is subsequently connected to a crook in the anode wire 34 such as by laser welding to secure them together. The glass 44 is, for example, ELAN® type 88 or MANSOL™ type 88. As shown in Figs. 1 and 9, in the final capacitor assembly the GTMS 38 electrically insulates the anode lead 36 connected to the anode wire 34 from the metal casing 18.

A separator 46 of electrically insulative material in the shape of a bag completely surrounds and envelops the anode 12 except the extending wire 34. The separator 46 prevents an internal electrical short circuit between the anode 12 and cathode active materials 14 in the assembled capacitor and has a degree of porosity sufficient to allow flow there through of the working electrolyte during the electrochemical reaction of the capacitor 10. Illustrative separator materials include woven and non-woven fabrics of polyolefinic fibers including polypropylene and polyethylene or fluoropolymeric fibers including polyvinylidene fluoride, polyethylenetetrafluoroethylene, and polyethylenechlorotrifluoroethylene laminated or superposed with a polyolefinic or fluoropolymeric microporous film, non-woven glass, glass fiber materials and ceramic materials. Suitable microporous films include a polyethylene membrane commercially available under the designation SOLUPOR® (DMS Solutech), a polytetrafluoroethylene membrane commercially available under the designation ZITEX® (Chemplast Inc.), a polypropylene membrane commercially available under the designation CELGARD® (Celanese Plastic Company, Inc.), and a membrane commercially available under the designation DEXIGLAS® (C. H. Dexter, Div., Dexter Corp.). Cellulose based separators also typically used in capacitors are contemplated by the scope of the present invention. Depending on the electrolyte used, the separator can be treated to improve its wettability, as is well known by those skilled in the art.

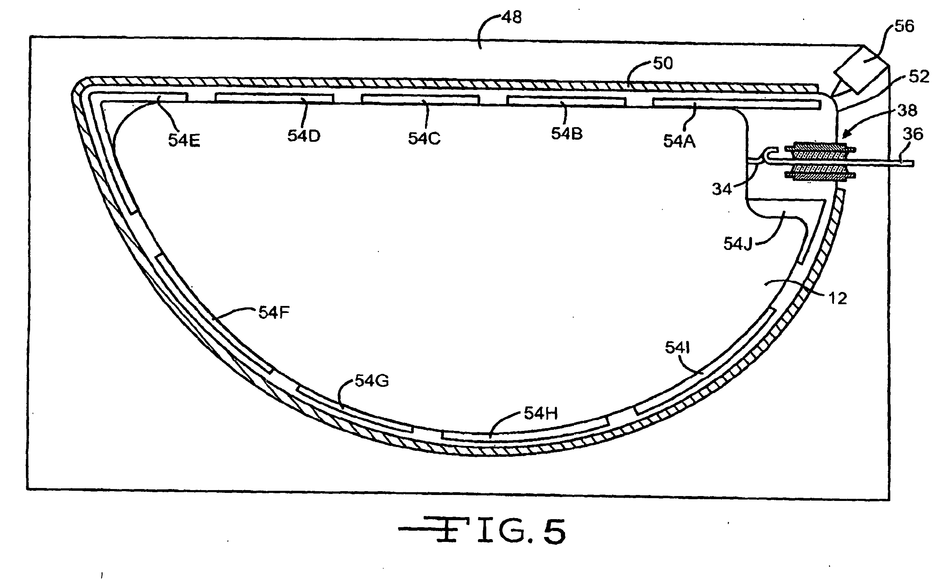

As shown in Fig. 5, the anode 12 connected to the anode lead 36 supported in the GTMS 38 is then positioned inside a mold portion 48. A metal welding strap 50 is also positioned in the mold portion 48 in a generally enclosing, but spaced relationship with the anode 12 and GTMS 38. The welding strap 50 is discontinuous at 52 to provide a space for the GTMS 38. As will be described in detail hereinafter, the metal strap 50 serves as a backing to protect the anode 12 and separator 46 from the laser welding light when the casing portions 18 and 20 are welded to each other during final capacitor assembly.

Once the anode 12 and GTMS 38 enclosed by the welding strap 50 are properly positioned in the mold portion 48, a plurality of spacers 54A to 54J are positioned about the periphery of the anode. The spacers are shaped to conform to the peripheral contour of the anode sidewall portion that they contact. However, the spacers 54A to 54J are spaced from each other as well as from the welding strap 50.

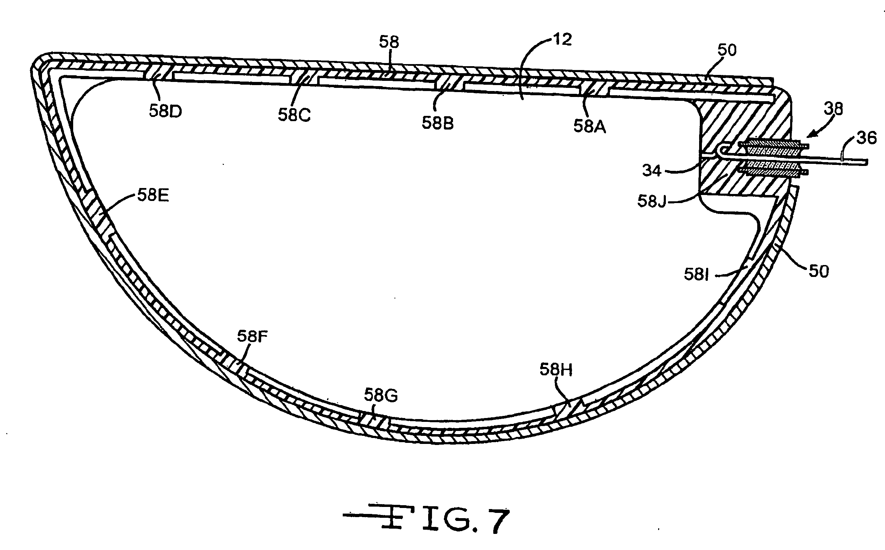

After the mold is closed, a nozzle 56 is hooked up to the mold. The nozzle 56 is used to inject a polymer material into the void between the welding strap 50 and the spacers 54A to 54J and the uncovered peripheral portions of the anode side wall. If desired, there can be more than one nozzle positioned at spaced locations about the periphery of the mold. The polymeric material is preferably of a fast curing type including a polyolefin, a fluoropolymer, a hot melt adhesive, or a UV curable adhesive. A relatively slow curing silastic material is also useful. This forms a polymeric cradle around the sidewall perimeter of the anode 12. Specifically, the cradle comprises a surrounding web 58 of the polymeric material supporting integral protrusions 58A to 58I formed between the spacers 54A to 54J. The surrounding web 58 contacts the welding strap 50 while the protrusions 58A to 58I contact the separator 46 along the anode sidewall. A rather large protrusion 58J is formed between spacers 54A and 54J to completely encase the GTMS 38 including the insulated anode lead 36 connected to the anode wire 34. The anode 12 held in position inside the weld strap 50 by the polymeric cradle comprising the web 58 and integral protrusions 58A to 58J is then removed from the mold 48 as an assembly (Fig. 7).

The cathode active material 14 preferably coats the face walls 24, 28, spaced from the respective sidewalls 22, 26. The pad printing process described in U.S. Patent Application Serial No. 10/920,942, filed August 18, 2004, is preferred for making such a coating. Ultrasonically generated aerosol as described in U.S. Patent Nos. 5,894,403; 5,920,455; 6,224,985; and 6,468,605, all to Shah et al., are also suitable deposition methods. These patents and patent application are assigned to the assignee of the present invention and incorporated herein by reference.

As shown in Fig. 8, casing portion 20 is provided with the cathode active material 14 coated on its face wall 28 in a pattern that generally mirrors the shape of the anode 12. The cathode active material 14 has a thickness of about a few hundred Angstroms to about 0.1 millimeters and is either directly coated on the inner surface of the face wall 28 or it is coated on a conductive substrate (not shown) in electrical contact with the inner surface of the face wall. The other casing portion 18 has the cathode active material 14 similarly coated on its face wall 24 or on a conductive substrate secured to the inner surface of the face wall in electrical contact therewith. In that respect, the face walls 24, 28 may be of an anodized-etched conductive material, have a sintered active material with or without oxide contacted thereto, be contacted with a double layer capacitive material, for example a finely divided carbonaceous material such as graphite or carbon or platinum black, a redox, pseudocapacitive or an under potential material, or be an electroactive conducting polymer such as polyaniline, polypyrole, polythiophene, polyacetylene, and mixtures thereof.

According to one preferred aspect of the present invention, the redox or cathode active material 14 includes an oxide of a first metal, the nitride of the first metal, the carbon nitride of the first metal, and/or the carbide of the first metal, the oxide, nitride, carbon nitride and carbide having pseudocapacitive properties. The first metal is preferably selected from the group consisting of ruthenium, cobalt, manganese, molybdenum, tungsten, tantalum, iron, niobium, iridium, titanium, zirconium, hafnium, rhodium, vanadium, osmium, palladium, platinum, nickel, and lead.

The cathode active material 14 may also include a second or more metals. The second metal is in the form of an oxide, a nitride, a carbon nitride or carbide, and is not essential to the intended use of the conductive face walls 24, 28 as a capacitor electrode. The second metal is different than the first metal and is selected from one or more of the group consisting of tantalum, titanium, nickel, iridium, platinum, palladium, gold, silver, cobalt, molybdenum, ruthenium, manganese, tungsten, iron, zirconium, hafnium, rhodium, vanadium, osmium, and niobium. In a preferred embodiment of the invention, the cathode active material 14 includes an oxide of ruthenium or oxides of ruthenium and tantalum.

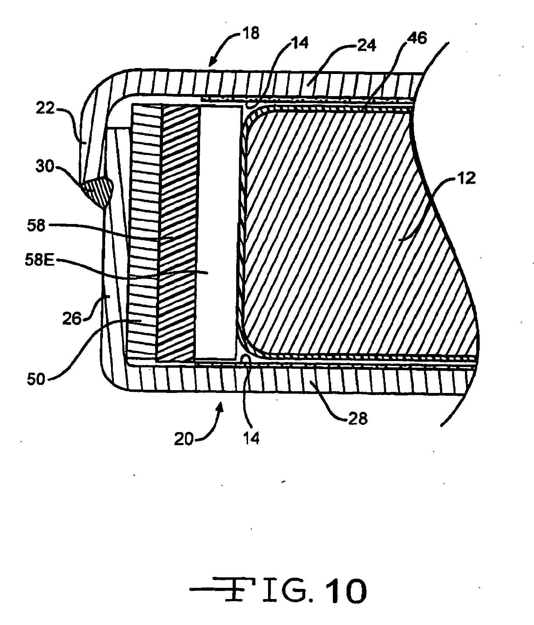

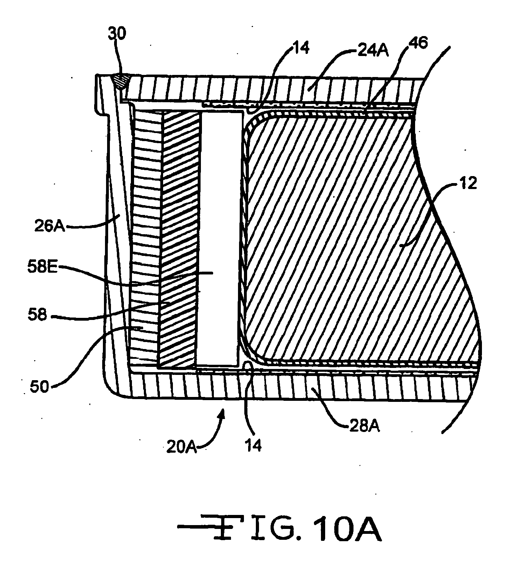

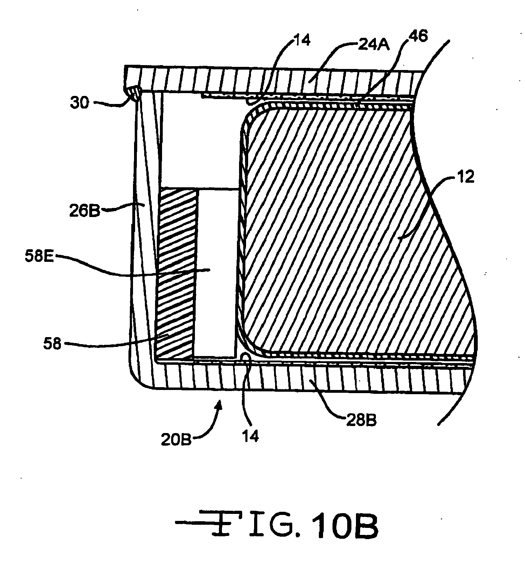

As shown in Fig. 9, the anode 12 surrounded by the polymeric cradle and the welding strap 50 as an assembly is then nested in the casing portion 20 with the GTMS 38 received in an opening 60 (Fig. 8) in the casing sidewall 26. The ferrule 40 of the GTMS has a distal step 40A (Fig. 3) that fits into the casing opening 60 in a tight fitting relationship. The welding strap 50 is likewise sized to fit inside the perimeter of the casing sidewall 26 in a closely spaced relationship. The ferrule 40 is then secured to the casing sidewall 26 such as by laser welding. This provides the anode 12 secured inside the casing portion 20 held in position by the polymeric cradle comprising the web 58 and integral protrusions 58A to 58J and the welding strap 50. In this position, the anode major face wall 12 (Fig. 10) is resting on the casing sidewall 26. However, the intermediate separator 46 prevents direct contact between the anode 12 and the cathode active material 14.

The other casing portion 18 is then mated to the casing portion 20 with their respective sidewalls 22 and 26 overlapping each other. The continuous weldment 30 provided about the perimeter of the casing sidewalls 22 and 26, such as by laser welding, secures the casing portions 18 and 20 to each other. The welding strap 50, however, prevents the laser light from penetrating into the interior of the capacitor to damage the anode 12 and separator 46 among other heat sensitive components.

A working electrolyte (not shown) is then provided in the capacitor through an opening in one of the casing portions 18, 20. A suitable working electrolyte for the capacitor 10 is described in U.S. Patent No. 6,219,222 to Shah et al., which includes a mixed solvent of water and ethylene glycol having an ammonium salt dissolved therein. U.S. Pub. Nos. 2003/0090857 and 2003/0142464 describe other working electrolytes for the present capacitors. The working electrolyte of the former publication comprises water, a water-soluble inorganic and/or organic acid and/or salt, and a water-soluble nitro-aromatic compound while the latter relates to an electrolyte having de-ionized water, an organic solvent, isobutyric acid and a concentrated ammonium salt. These publications and patent are assigned to the assignee of the present invention and incorporated herein by reference. The electrolyte fill opening is then closed by a hermetic closure (not shown), as is well known by those skilled in the art.

The spaces formed between the protrusions 58A to 58J of the polymeric cradle provide for the electrolyte to thoroughly wet the anode 12 including the enveloping separator 46 and the cathode active materials 14 to provide the capacitor 10 in a functional state. The welding strap 50 encloses and contacts the polymeric web 58 including protrusions 58A to 58J that, in turn, contact the separator 46 at the anode sidewall and encase the GTMS 38. This prevents any movement of these components should the capacitor be subject to high shock and vibration conditions.

Fig. 10A shows an alternate embodiment of a casing for the present capacitor. The casing comprises portion 20A having a surrounding sidewall 26A extending to a face wall 28A supporting the cathode active material 14. The sidewall 26A has a step at its upper end that received a plate 24A serving as a second face wall for supporting the cathode active material 14. The plate 24A is nested therein. A weld 30 secures the plate 24A to the sidewall 26A at the step with the upper surface of the plate being coplanar with the upper end of the sidewall 26A. The remaining structure for this capacitor is as previously described.

Fig. 10B shows another embodiment of a casing for the present capacitor. The casing comprises portion 20B having a surrounding sidewall 26B extending to a face wall 28B supporting the cathode active material 14. A plate 24A rests on the upper edge of the sidewall 26B and serves as a second face wall for supporting the cathode active material 14. Plate 24A extends a short distance out beyond the sidewall 26B. A weld 30 then secures the plate 24A to the sidewall 26B where the plate overhangs or extends past the sidewall. Also, in this embodiment, the weld strap has been eliminated from the mold shown in Fig. 5 and the height of the polymeric web is shortened from that shown in the other embodiments. Elimination of the welding strap is possible with the laser beam being aimed at the corner where the plate 24A extends past the sidewall 26B. The remaining structure for this capacitor is as previously described.

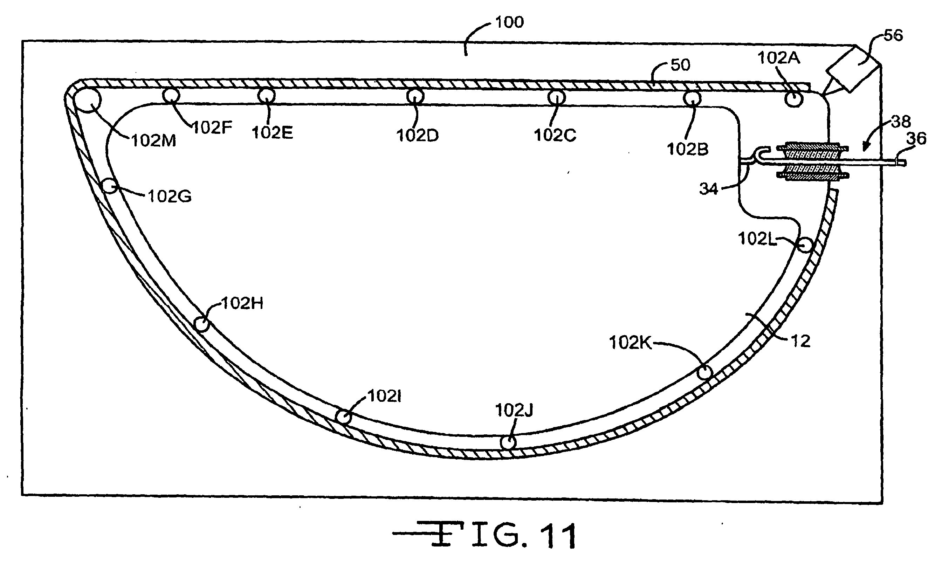

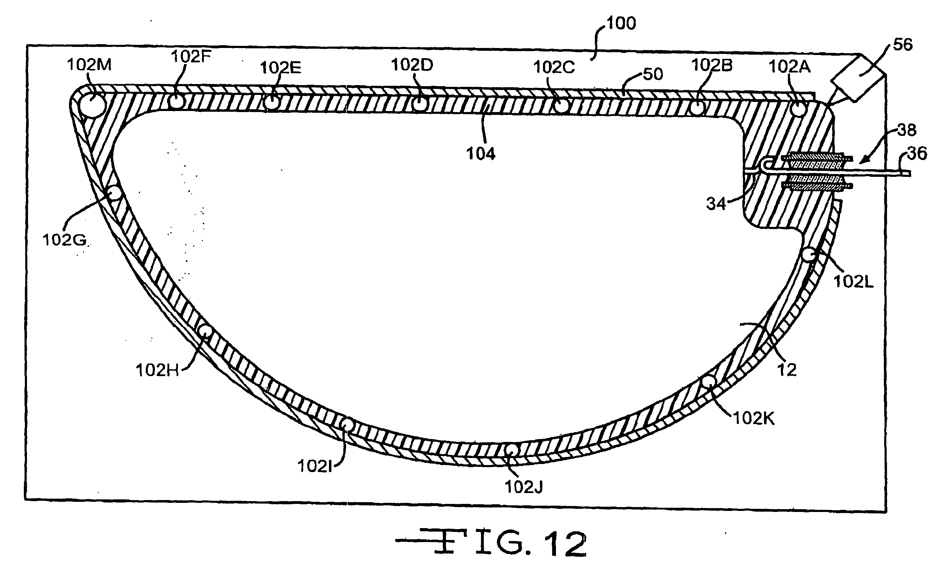

Figs. 11 and 12 show an alternate embodiment for providing a polymeric cradle according to the present invention. The anode 12 connected to the anode lead 36 supported in the GTMS 38 is first positioned inside a mold portion 100. The metal welding strap 50 is also positioned in the mold portion 100 in a generally enclosing, but spaced relationship with the anode 12 and GTMS 38. Once the anode 12 and GTMS 38 enclosed by the welding strap 50 are properly positioned in the mold portion 100, a plurality of spacer pegs 102A to 102M are positioned about the periphery of the anode. The pegs 102A to 102L are cylindrically shaped with a diameter to contact both the welding strap 50 and the perimeter of the anode sidewall. A relatively large cylindrically shaped peg 102M is positioned in a corner of the welding strap 50, but it is not in contact with the anode sidewall. This peg is for the purpose of maintaining the position of the welding strap. The pegs 102A to 102L are spaced from each other.

After the mold is closed, the nozzle 56 is hooked up to it. As before, the nozzle 56 is used to inject a polymer material into the spaces or gaps between the pegs 102A to 102L and the uncontacted peripheral portions of the anode sidewall. The polymeric material is similar to that used in the previous embodiment and forms a polymeric cradle 104 around the sidewall perimeter of the anode 12. In this case, the cradle 104 comprises the surrounding polymeric material contacting between the welding strap 50 and the anode sidewall. The anode 12 held in position inside the weld strap 50 by the polymeric cradle 104 is then removed from the mold 48 as an assembly for further processing into a functional capacitor as previously described with respect to the first embodiment of the present invention continuing with Fig. 9.

The casing 16, including the portions 18, 20, being of a conductive metal serves as the negative terminal for making electrical connection between the capacitor 10 and its load. A pin (not shown) is welded to one of the casing portions 18, 20 to provide this. The anode lead 36 extending outside the capacitor 10 is hermetically sealed from the interior of the capacitor and insulated from the mating casing portions 18, 20 by the GTMS 38 to serve as the positive terminal for the capacitor 10.

While all of the embodiments described herein show the polymeric cradle used with a single anode pellet, that should not be construed as limiting. It is contemplate by the scope of the present invention that the polymeric cradle can be used with two or more side-by-side anodes provided in one of the previously described casings. Such a multiple anode design is shown in U.S. patent No. 6,850,405 to Mileham et al. This patent is assigned to the assignee of the present invention.

## Claims

1. A capacitor (10), which comprises:
a) either i) a first casing portion (18) comprising a first face wall (24) supporting a first surrounding sidewall (22) and a second casing portion (20) comprising a second face wall (28), wherein the first casing portion (18) is securable to the second casing portion (20) to provide an enclosure for the capacitor or ii) a first casing portion (18) comprising a first face wall (24) supporting a first surrounding sidewall (22) and a second casing portion (20) comprising a second face wall (28) supporting a second surrounding sidewall (26), wherein at least a portion of the first casing sidewall (22) is sized to fit inside the second casing sidewall (26) to mate the first casing portion (18) with the second casing portion (20) as an enclosure for the capacitor.
b) a cathode active material (14) supported by, and in electrical contact with, the first and second face walls (24, 28);
c) an anode (12) comprising an anode sidewall extending to first and second major face walls positioned adjacent to the cathode active material (14) on the first and second face walls (24, 28);
d) a separator (46) positioned intermediate the anode (12) and the cathode active material (14) on the first and second face walls (24, 28);
e) a glass-to-metal seal (38) supported in at least one of the first and second casing portions (18, 20) to electrically insulate the anode lead (36) from the enclosure serving as the cathode terminal;
f) a cradle (58) disposed between the anode sidewall and the first and second casing i) portions (18, 20) or ii) sidewalls (22, 26), respectively, to prevent the anode (12) from moving inside the enclosure when the capacitor is subjected to shock and vibration forces; and
g) a working electrolyte provided in the enclosure in contact with the anode (12) and cathode active material (14).

2. The capacitor of Claim 1 wherein i) a welding strap (50) is provided between the anode (12) and at least the first surrounding sidewall (22) of the first casing portion (18) being mated to the second casing portion (20) or ii) a welding strap (50) is provided between the anode (12) and at least the first surrounding sidewall (22) of the first casing portion (18) mated to the second surrounding sidewall (26) of the second casing portion (20), respectively.

3. The capacitor of Claim 1 or Claim 2 wherein the cradle (58) has a web portion with a plurality of protrusions (58A-58J) extending from the web and contacting the anode sidewall.

4. The capacitor of any one of the preceding claims wherein i) the cradle (58) contacts the anode sidewall and a welding strap (50) provided between where the first casing portion (18) is secured to the second casing portion (20) or ii) the cradle (58) contacts the anode sidewall and a welding strap (50) provided between a seam created by the first surrounding sidewall (22) of the first casing portion (18) mated to the second surrounding sidewall (26) of the second casing portion (20), respectively.

5. The capacitor of any one of the preceding claims wherein the cradle (58) is of a polymeric material molded about the anode sidewall and at least partially encasing the glass-to-metal seal (38).

6. The capacitor of any one of the preceding claims wherein the second casing portion (20) is a plate (24A) supported at an upper edge of the first surrounding sidewall (26A/26B) of the first casing portion (20A/20B).

7. The capacitor of any one of the preceding claims wherein the anode active material is selected from the group consisting of tantalum, aluminium, titanium, niobium, zirconium, hafnium, tungsten, molybdenum, vanadium, silicon, germanium, and mixtures thereof.

8. The capacitor of any one of the preceding claims wherein the cathode active material is selected from the group consisting of ruthenium, cobalt, manganese, molybdenum, tungsten, tantalum, iron, niobium, iridium, titanium, zirconium, hafnium, rhodium, vanadium, osmium, palladium, platinum, nickel, lead, gold, silver, cobalt, and mixtures thereof.

9. A method for providing a capacitor (10), comprising the steps of:
a) providing a first casing portion (18) comprising a first face wall (24) supporting a first surrounding sidewall (22), wherein a cathode active material (14) is in electrical contact with the first casing face wall (24);
b) providing an anode (12) comprising an anode sidewall extending to first and second major face walls, wherein an anode wire (34) extends from the anode (12);
c) supporting an anode lead (36) in a glass-to-metal seal (38) and connecting the anode lead (36) to the anode wire (34);
d) enveloping the anode (12) in a separator (46);
e) providing a cradle (58) in a surrounding and contacting relationship with the anode sidewall;
f) nesting the anode (12) including the surrounding cradle (58) in the first casing portion (18) with the first major face wall of the anode adjacent to the cathode active material (14) and wherein the glass-to-metal seal (38) is at least partially supported by the first casing sidewall (22) with the anode lead (36) extending therefrom;
g) providing a second casing portion (20) comprising a second face wall (28) having a cathode active material (14) in electrical contact therewith and adjacent to the second major face wall of the anode (12);
h) welding the first casing portion (18) to the second casing portion (20) to provide an enclosure for the capacitor; and
i) providing an electrolyte in the enclosure in contact with the anode (12) and cathode active material (14).

10. The method of Claim 9 including positioning the anode (12) enveloped by the separator (46) in a mold interior of a welding strap (50) and then positioning a plurality of spacers (54A-54J) about the anode (12) contacting the separator (46) at the anode sidewall, but spaced from the welding strap (50).

11. The method of Claim 9 or Claim 10 including injecting a polymeric material into the mold to provide the cradle (58) contacting the separator (46) in a surrounding relationship to the anode sidewall.

12. the method of Claim 9, 10 or 11 including encasing a major portion of the glass-to-metal seal (38) in the polymeric material.

13. The method of any one of Claims 9 to 12 including nesting the anode (12) surrounded by the cradle (58) contacting an inner surface of the welding strap (50) with the welding strap (50) contacting at least one of the first and second casing portions (18, 20).

14. The method of any one of Claims 9 to 13 including positioning the anode (12) enveloped by the separator (58) in a mold interior of a welding strap (50) and then positioning a plurality of spacers (54A-54J) about the anode (12) contacting the welding strap (50) and the separator (58) at the anode sidewall.

15. The method of any one of Claims 9 to 14 including positioning the anode (12) enveloped by the separator (58) in a mold and then positioning a plurality of spacers (54A-54J) about the anode (12) contacting the separator (58) at the anode sidewall.

16. The method of any one of Claims 9 to 15 including selecting the anode active material, from the group consisting of tantalum, aluminium, titanium, niobium, zirconium, hafnium, tungsten, molybdenum, vanadium, silicon, germanium, and mixtures thereof and selecting the cathode active material from the group consisting of ruthenium, cobalt, manganese, molybdenum, tungsten, tantalum, iron, niobium, iridium, titanium, zirconium, hafnium, rhodium, vanadium, osmium, palladium, platinum, nickel, lead, gold, silver, cobalt, and mixtures thereof.

## Patentansprüche

1. Kondensator (10), der umfasst:
a) entweder i) einen ersten Gehäuseabschnitt (18) mit einer ersten Stirnwand (24), die eine erste Umfangsseitenwand (22) trägt, und einen zweiten Gehäuseabschnitt (20) mit einer zweiten Stirnwand (28), wobei der erste Gehäuseabschnitt (18) an dem zweiten Gehäuseabschnitt (20) befestigt werden kann, um eine Umschließung für den Kondensator zu schaffen, oder ii) einen ersten Gehäuseabschnitt (18) mit einer ersten Stirnwand (24), die eine erste Umfangsseitenwand (22) trägt, und einen zweiten Gehäuseabschnitt (20) mit einer zweiten Stirnwand (28), die eine zweite Umfangsseitenwand (26) trägt, wobei wenigstens ein Abschnitt der ersten Gehäuseseitenwand (22) so bemessen ist, dass er in die zweite Gehäuseseitenwand (26) passt, um den ersten Gehäuseabschnitt (18) und den zweiten Gehäuseabschnitt (20) zu einer Umschließung für den Kondensator zusammenzufügen;
b) ein katodenaktives Material (14), das von der ersten und der zweiten Stirnwand (24, 28) getragen wird und damit in elektrischem Kontakt ist;
c) eine Anode (12), die eine Anodenseitenwand aufweist, die sich zu einer ersten und einer zweiten Hauptstirnwand erstreckt, die benachbart zu dem katodenaktiven Material (14) auf der ersten und der zweiten Stirnwand (24, 28) positioniert sind;
d) einen Separator (46), der zwischen der Anode (12) und dem katodenaktiven Material (14) an der ersten und der zweiten Stirnwand (24, 28) positioniert ist;
e) eine Glas/Metall-Dichtung (38), die von dem ersten und/oder dem zweiten Gehäuseabschnitt (18, 20) getragen wird, um die Anodenleitung (36) von der als Katodenanschluss dienenden Umschließung elektrisch zu isolieren;
f) eine Aussteifung (58), die zwischen der Anodenseitenwand und i) dem ersten und dem zweiten Gehäuseabschnitt (18, 20) oder ii) den Seitenwänden (22, 26) des ersten bzw. des zweiten Gehäuseabschnitts angeordnet ist, um zu verhindern, dass sich die Anode (12) in der Umschließung bewegt, wenn der Kondensator Stoß- und Schwingungskräften unterliegt; und
g) einen Arbeitselektrolyt, der in der Umschließung in Kontakt mit der Anode (12) und dem katodenaktiven Material (14) vorgesehen ist.

2. Kondensator nach Anspruch 1, wobei i) ein Schweißband (50) zwischen der Anode (12) und wenigstens der ersten Umfangsseitenwand (22) des ersten Gehäuseabschnitts (18), der in den zweiten Gehäuseabschnitt (20) eingesetzt ist, vorgesehen ist oder ii) ein Schweißband (50) zwischen der Anode (12) und wenigstens der ersten Umfangsseitenwand (22) des ersten Gehäuseabschnitts (18), die in die zweite Umfangsseitenwand (26) des zweiten Gehäuseabschnitts (20) eingesetzt ist, vorgesehen ist.

3. Kondensator nach Anspruch 1 oder Anspruch 2, wobei die Aussteifung (58) einen Stegabschnitt mit mehreren Vorsprüngen (58A-58J), die sich von dem Steg erstrecken und mit der Anodenseitenwand in Kontakt gelangen, besitzt.

4. Kondensator nach einem der vorhergehenden Ansprüche, wobei i) die Aussteifung (58) mit der Anodenseitenwand und mit einem Schweißband (50), das dort vorgesehen ist, wo der erste Gehäuseabschnitt (18) an dem zweiten Gehäuseabschnitt (20) vorgesehen ist, in Kontakt ist oder ii) die Aussteifung (58) mit der Anodenseitenwand und einem Schweißband (50), das zwischen einer Naht vorgesehen ist, die durch die erste Umfangsseitenwand (22) des ersten Gehäuseabschnitts (18), die in die zweite Umfangsseitenwand (26) des zweiten Gehäuseabschnitts (20) eingesetzt ist, erzeugt wird, in Kontakt ist.

5. Kondensator nach einem der vorhergehenden Ansprüche, wobei die Aussteifung (58) aus einem Polymermaterial besteht, das um die Anodenseitenwand gegossen ist und die Glas/Metall-Dichtung (38) wenigstens teilweise umgibt.

6. Kondensator nach einem der vorhergehenden Ansprüche, wobei der zweite Gehäuseabschnitt (20) eine Platte (24A) ist, die an der Oberkante der ersten Umfangsseitenwand (26A/26B) des ersten Gehäuseabschnitts (20A/20B) unterstützt ist.

7. Kondensator nach einem der vorhergehenden Ansprüche, wobei das anodenaktive Material aus der Gruppe ausgewählt ist, die besteht aus Tantal, Aluminium, Titan, Niob, Zirkon, Haffnium, Wolfram, Molybdän, Vanadium, Silicium, Germanium und Gemischen hiervon.

8. Kondensator nach einem der vorhergehenden Ansprüche, wobei das katodenaktive Material aus der Gruppe ausgewählt ist, die besteht aus Ruthenium, Kobalt, Mangan, Molybdän, Wolfram, Tantal, Eisen, Niob, Iridium, Titan, Zirkon, Haffnium, Rhodium, Vanadium, Osmium, Palladium, Platin, Nickel, Blei, Gold, Silber, Kobalt und Gemischen hiervon.

9. Verfahren zum Schaffen eines Kondensators (10), das die folgenden Schritte umfasst:
a) Vorsehen eines ersten Gehäuseabschnitts (18) mit einer ersten Stirnwand (24), die eine erste Umfangsseitenwand (22) trägt, wobei mit der ersten Gehäusestirnwand (24) ein katodenaktives Material (14) in elektrischem Kontakt ist;
b) Vorsehen einer Anode (12) mit einer Anodenseitenwand, die sich zu einer ersten und einer zweiten Hauptstimwand erstreckt, wobei sich von der Anode (12) ein Anodendraht (34) erstreckt;
c) Unterstützen einer Anodenleitung (36) in einer Glas/Metall-Dichtung (38) und Verbinden der Anodenleitung (36) mit dem Anodendraht (34);
d) Umhüllen der Anode (12) in einem Separator (46);
e) Vorsehen einer Aussteifung (58) in einer umgebenden und einen Kontakt herstellenden Beziehung mit der Anodenseitenwand;
f) verschachteltes Anordnen der Anode (12) einschließlich der umgebenden Aussteifung (58) in dem ersten Gehäuseabschnitt (18) und der ersten Hauptstirnfläche der Anode benachbart zu dem katodenaktiven Material (14), wobei die Glas/Metall-Dichtung (38) wenigstens teilweise durch die erste Gehäuseseitenwand (22) unterstützt ist, wobei sich die Anodenleitung (36) hiervon erstreckt;
g) Vorsehen eines zweiten Gehäuseabschnitts (20) mit einer zweiten Stirnwand (28), die ein katodenaktives Material (14) besitzt, das hiermit in elektrischem Kontakt ist und zu der zweiten Hauptstimwand der Anode (12) benachbart ist;
h) Verschweißen des ersten Gehäuseabschnitts (18) und des zweiten Gehäuseabschnitts (20), um eine Umschließung für den Kondensator zu schaffen; und
i) Vorsehen eines Elektrolyten in der Umschließung in Kontakt mit der Anode (12) und dem katodenaktiven Material (14).

10. Verfahren nach Anspruch 9, das das Positionieren der durch den Separator (46) umhüllten Anode (12) in einer Gießform innerhalb eines Schweißbandes (50) und dann das Positionieren mehrerer Abstandshalter (54A-54J) um die Anode (12), die mit dem Separator (46) an der Anodenseitenwand in Kontakt sind, jedoch von dem Schweißband (50) beabstandet sind, umfasst.

11. Verfahren nach Anspruch 9 oder Anspruch 10, das das Einspritzen eines Polymermaterials in die Gießform umfasst, um die Aussteifung (58) zu schaffen, die mit dem Separator (46) in einer umgebenden Beziehung mit der Anodenseitenwand in Kontakt ist.

12. Verfahren nach Anspruch 9, 10 oder 11, das das Einsetzen eines Hauptabschnitts der Glas/Metall-Dichtung (38) in das Polymermaterial umfasst.

13. Verfahren nach einem der Ansprüche 9 bis 12, das das verschachtelte Anordnen der Anode (12), die von der Aussteifung (58) umgeben ist, die mit einer inneren Oberfläche des Schweißbandes (50) in Kontakt ist, und des Schweißbandes (50), das mit dem ersten und/oder dem zweiten Gehäuseabschnitt (18, 20) in Kontakt ist, umfasst.

14. Verfahren nach einem der Ansprüche 9 bis 13, das das Positionieren der von dem Separator (58) umgebenen Anode (12) in einer Gießform innerhalb eines Schweißbandes (50) und dann das Positionieren mehrerer Abstandshalter (54A-54J) um die Anode (12), die mit dem Schweißband (50) und mit dem Separator (58) an der Anodenseitenwand in Kontakt sind, umfasst.

15. Verfahren nach einem der Ansprüche 9 bis 14, das das Positionieren der von dem Separator (58) umgebenen Anode (12) in einer Gießform und dann das Positionieren mehrerer Abstandshalter (54A-54J) um die Anode (12), die mit dem Separator (58) an der Anodenseitenwand in Kontakt sind, umfasst.

16. Verfahren nach einem der Ansprüche 9 bis 15, das umfasst: Auswählen des anodenaktiven Materials aus der Gruppe, die aus Tantal, Aluminium, Titan, Niob, Zirkon, Haffnium, Wolfram, Molybdän, Vanadium, Silicium, Germanium und Gemischen hiervon besteht, und Auswählen des katodenaktiven Materials aus der Gruppe, die aus Ruthenium, Kobalt, Mangan, Molybdän, Wolfram, Tantal, Eisen, Niob, Iridium, Titan, Zirkon, Haffnium, Rhodium, Vanadium, Osmium, Palladium, Platin, Nickel, Blei, Gold, Silber, Kobalt und Gemischen hiervon besteht.

## Revendications

1. Condensateur (10), qui comprend :
a) soit i) une première partie de boîtier (18) comprenant une première paroi de face (24) supportant une première paroi latérale (22) environnante et une deuxième partie de boîtier (20) comprenant une deuxième paroi de face (28), dans lequel la première partie de boîtier (18) est fixable à la deuxième partie de boîtier (20) pour réaliser une enceinte pour le condensateur, soit ii) une première partie de boîtier (18) comprenant une première paroi de face (24) supportant une première paroi latérale (22) environnante et une deuxième partie de boîtier (20) comprenant une deuxième paroi de face (28) supportant une deuxième paroi latérale (26) environnante, dans lequel au moins une partie de la première paroi latérale (22) de boîtier est dimensionnée pour s'insérer à l'intérieur de la deuxième paroi latérale (26) de boîtier pour accoupler la première partie de boîtier (18) avec la deuxième partie de boîtier (20) en tant qu'enceinte pour le condensateur,
b) un matériau actif de cathode (14) supporté par, et en contact électrique avec, les première et deuxième parois de face (24, 28) ;
c) une anode (12) comprenant une paroi latérale d'anode s'étendant vers les première et deuxième parois de face principales positionnée adjacente au matériau actif de cathode (14) sur les première et deuxième parois de face (24, 28) ;
d) un séparateur (46) positionné entre l'anode (12) et le matériau actif de cathode (14) sur les première et deuxième parois de face (24, 28) ;
e) un joint verre-métal (38) supporté dans au moins l'une des première et deuxième parties de boîtier (18, 20) pour isoler électriquement le conducteur d'anode (36) de l'enceinte servant en tant que borne de cathode ;
f) un berceau (58) disposé entre la paroi latérale d'anode et les première et deuxième i) parties de boîtier (18, 20) ou ii) parois latérales (22, 26), respectivement, pour empêcher l'anode (12) de se déplacer à l'intérieur de l'enceinte lorsque le condensateur est soumis à des forces d'impact et de vibration ; et
g) un électrolyte de travail prévu dans l'enceinte en contact avec l'anode (12) et le matériau actif de cathode (14).

2. Condensateur selon la revendication 1, dans lequel i) une bande de soudage (50) est prévue entre l'anode (12) et au moins la première paroi latérale (22) environnante de la première partie de boîtier (18) qui est accouplée avec la deuxième partie de boîtier (20) ou ii) une bande de soudage (50) est prévue entre l'anode (12) et au moins la première paroi latérale (22) environnante de la première partie de boîtier (18) accouplée avec la deuxième paroi latérale (26) environnante de la deuxième partie de boîtier (20), respectivement.

3. Condensateur selon la revendication 1 ou la revendication 2, dans lequel le berceau (58) comporte une partie de toile avec une pluralité de protubérances (58A à 58J) s'étendant de la toile et venant en contact avec la paroi latérale d'anode.

4. Condensateur selon l'une quelconque des revendications précédentes, dans lequel i) le berceau (58) est en contact avec la paroi latérale d'anode et une bande de soudage (50) prévue entre là où la première partie de boîtier (18) est fixée à la deuxième partie de boîtier (20) ou ii) le berceau (58) est en contact avec la paroi latérale d'anode et une bande de soudage (50) prévue entre un joint créé par la première paroi latérale (22) environnante de la première partie de boîtier (18) accouplée avec la deuxième paroi latérale (26) environnante de la deuxième partie de boîtier (20), respectivement.

5. Condensateur selon l'une quelconque des revendications précédentes, dans lequel le berceau (58) est réalisé en un matériau polymérique moulé autour de la paroi latérale d'anode et en enfermant au moins partiellement le joint verre-métal (38).

6. Condensateur selon l'une quelconque des revendications précédentes, dans lequel la deuxième partie de boîtier (20) est une plaque (24A) supportée au niveau d'un bord supérieur de la première paroi latérale (26A/26B) environnante de la première partie de boîtier (20A/20B).

7. Condensateur selon l'une quelconque des revendications précédentes, dans lequel le matériau actif d'anode est sélectionné dans le groupe consistant en le tantale, l'aluminium, le titane, le niobium, le zirconium, l'hafnium, le tungstène, le molybdène, le vanadium, le silicium, le germanium et des mélanges de ceux-ci.

8. Condensateur selon l'une quelconque des revendications précédentes, dans lequel le matériau actif de cathode est sélectionné dans le groupe consistant en le ruthénium, le cobalt, le manganèse, le molybdène, le tungstène, le tantale, le fer, le niobium, l'iridium, le titane, le zirconium, l'hafnium, le rhodium, le vanadium, l'osmium, le palladium, le platine, le nickel, le plomb, l'or, l'argent, le cobalt et des mélanges de ceux-ci.

9. Procédé pour réaliser un condensateur (10), comprenant les étapes consistant à :
a) fournir une première partie de boîtier (18) comprenant une première paroi de face (24) supportant une première paroi latérale (22) environnante, dans lequel un matériau actif de cathode (14) est en contact électrique avec la première paroi de face de boîtier (24) ;
b) fournir une anode (12) comprenant une paroi latérale d'anode s'étendant vers des première et deuxième parois de face principales, dans lequel un fil d'anode (34) s'étend de l'anode (12) ;
c) supporter un conducteur d'anode (36) dans un joint verre-métal (38) et connecter le conducteur d'anode (36) au fil d'anode (34) ;
d) envelopper l'anode (12) dans un séparateur (46) ;
e) fournir un berceau (58) dans une relation d'encerclement et de contact avec la paroi latérale d'anode ;
f) loger l'anode (12) comprenant le berceau (58) environnant dans la première partie de boîtier (18) avec la première paroi de face principale de l'anode adjacente au matériau actif de cathode (14), et dans lequel le joint verre-métal (38) est au moins partiellement supporté par la première paroi latérale de boîtier (22) avec le conducteur d'anode (36) s'étendant de celle-ci ;
g) fournir une deuxième partie de boîtier (20) comprenant une deuxième paroi de face (28) ayant un matériau actif de cathode (14) en contact électrique avec celle-ci et adjacente à la deuxième paroi de face principale de l'anode (12) ;
h) souder la première partie de boîtier (18) à la deuxième partie de boîtier (20) pour réaliser une enceinte pour le condensateur ; et
i) fournir un électrolyte dans l'enceinte en contact avec l'anode (12) et le matériau actif de cathode (14).

10. Procédé selon la revendication 9, comprenant l'étape consistant à positionner l'anode (12) enveloppée par le séparateur (46) dans un moule à l'intérieur d'une bande de soudage (50) et positionner ensuite une pluralité d'éléments d'espacement (54A à 54J) autour de l'anode (12) en contact avec le séparateur (46) au niveau de la paroi latérale d'anode, mais espacés de la bande de soudage (50).

11. Procédé selon la revendication 9 ou la revendication 10, comprenant l'étape consistant à injecter un matériau polymérique dans le moule pour réaliser le berceau (58) en contact avec le séparateur (46) dans une relation d'encerclement avec la paroi latérale d'anode.

12. Procédé selon la revendication 9, 10 ou 11, comprenant l'enfermement d'une partie principale du joint verre-métal (38) dans le matériau polymérique.

13. Procédé selon l'une quelconque des revendications 9 à 12, comprenant le logement de l'anode (12) entourée par le berceau (58) en contact avec une surface intérieure de la bande de soudage (50) avec la bande de soudage (50) en contact avec au moins l'une des première et deuxième parties de boîtier (18, 20).

14. Procédé selon l'une quelconque des revendications 9 à 13, comprenant l'étape consistant à positionner l'anode (12) enveloppée par le séparateur (58) dans un moule à l'intérieur d'une bande de soudage (50) et à positionner ensuite une pluralité d'éléments d'espacement (54A à 54J) autour de l'anode (12) en contact avec la bande de soudage (50) et le séparateur (58) au niveau de la paroi latérale d'anode.

15. Procédé selon l'une quelconque des revendications 9 à 14, comprenant l'étape consistant à positionner l'anode (12) enveloppée par le séparateur (58) dans un moule et à positionner ensuite une pluralité d'éléments d'espacement (54A à 54J) autour de l'anode (12) en contact avec le séparateur (58) au niveau de la paroi latérale d'anode.

16. Procédé selon l'une quelconque des revendications 9 à 15, comprenant l'étape consistant à sélectionner le matériau actif d'anode dans le groupe consistant en le tantale, l'aluminium, le titane, le niobium, le zirconium, l'hafnium, le tungstène, le molybdène, le vanadium, le silicium, le germanium et des mélanges de ceux-ci et à sélectionner le matériau actif de cathode dans le groupe consistant en le ruthénium, le cobalt, le manganèse, le molybdène, le tungstène, le tantale, le fer, le niobium, l'iridium, le titane, le zirconium, l'hafnium, le rhodium, le vanadium, l'osmium, le palladium, le platine, le nickel, le plomb, l'or, l'argent, le cobalt et des mélanges de ceux-ci.
